# EUROPEAN PATENT APPLICATION

(11) **EP 3 842 488 A1**
(43) Date of publication of application: **30.06.2021**
(21) Application number: 20183892.7
(22) Date of filing: 03.07.2020
(51) Int. Cl.: C08L 23/08, A43B 1/00, B29D 35/00, B29D 35/12

(54) **SHOE SOLE MATERIAL COMPOSITION, SHOE SOLE MATERIAL AND METHOD FOR PRODUCING THE SAME**

(30) Priority: 27.12.2019 TW 108148210
(71) Applicant: National Cheng Kung University, Tainan City (TW)
(72) Inventor: CHEN, Chuh-Yung, Tainan City 701 (TW); HUANG, Cheng-Wei, Taoyuan City 338 (TW); WU, Meng-Heng, Tainan City 701 (TW); LAI, Chao-Yu, Taichung City 411 (TW)
(74) Representative: Cabinet Beaumont

(57) **Abstract**

The present invention relates to a shoe sole material composition, a shoe sole material and a method for producing the same. The shoe sole material composition comprises a blending mixture and a crosslinking agent. The blending mixture includes an elastomer and a thermoplastic material. An amount of the elastomer is larger than an amount of the thermoplastic material. The crosslinking agent is subjected the elastomer to a crosslinking reaction during a heating and blending process, such that the elastomer can invert into a discontinuous phase dispersed in the thermoplastic material, thereby producing the shoe sole of the present invention. Therefore, the shoe sole material has an excellent recycling property, further improving reusability of the shoe sole.

## Description

### BACKGROUND

### Field of Invention

The present invention relates to a shoe sole material. More particularly, a shoe sole material with excellent recycling property is provided.

### Description of Related Art

As the improvement of properties of polymer materials and blending technologies, production and materials of a shoe sole are improved daily. Generally, the shoe sole is consisted of a midsole and an outsole. The outsole contacts the ground directly, requiring a frictional force to allow the human body to move easily, so the outsole needs to have excellent wear resistance. Further, the midsole serves as a support of the shoe to absorb and buffer the counter force during movement, thereby protecting the human body. Therefore, the components such as the midsole, the outsole and the like have totally different properties and functions.

Because a rise of environmental awareness, reusability of products is viewed as an important property. However, the conventional shoe sole is not made from recyclable materials, such that it cannot be recycled and reused and it cannot further be processed by other treating methods. Therefore, the conventional shoe sole has poor reusability, so as to enhance environmental burdens.

In view of this, there is an urgent need to provide a shoe sole material composition, a shoe sole material and a method for producing the same, thereby producing a recyclable shoe sole for improving the disadvantages of the conventional shoe soles.

### SUMMARY

Therefore, an aspect of the present invention is to provide a shoe sole material composition. The shoe sole material composition comprises specific compositions, such that the shoe sole material composition can produce a shoe sole material with excellent recyclable properties.

Another aspect of the present invention is to provide a method for producing a shoe sole material. The method subjects the elastomer of the aforementioned shoe sole material composition to a crosslinking reaction, so as to induce a phase-inversion between the elastomer and the thermoplastic material.

Another aspect of the present invention is to provide a shoe sole material. The shoe sole material is formed by the aforementioned method.

According to the aforementioned aspect of the present invention, the shoe sole material composition is provided. The shoe sole material composition comprises a blending mixture and a crosslinking agent. The blending mixture includes an elastomer and a thermoplastic material. The elastomer includes an ethylene vinyl acetate, and the thermoplastic material includes a thermoplastic polyurethane. An amount of the elastomer is more than an amount of the thermoplastic material. In the blending mixture, the elastomer is a continuous phase, and the thermoplastic material is a discontinuous phase dispersed in the continuous phase. The crosslinking agent subjects the elastomer to a crosslinking reaction, and the shoe sole material is obtained by the shoe sole material composition with the crosslinking reaction. In the shoe sole material, the thermoplastic material is phase-inverted to a continuous phase, and the crosslinked elastomer is a discontinuous phase dispersed in the continuous phase.

According to an embodiment of the present invention, an amount of vinyl acetate groups of the ethylene vinyl acetate is 9% to 40%.

According to another embodiment of the present invention, a reacting temperature of the crosslinking reaction is higher than 180°C.

According to yet another embodiment of the present invention, the reacting temperature of the crosslinking reaction is higher than 180°C and lower than or equal to 240°C.

According to yet another embodiment of the present invention, based on an amount of the blending mixture as 100 parts by weight, an amount of the elastomer is more than 50 parts by weight and less than or equal to 80 parts by weight, and an amount of the thermoplastic material is more than or equal to 20 parts by weight and less than 50 parts by weight.

According to yet another embodiment of the present invention, based on the amount of the elastomer as 100 parts by weight, an amount of the crosslinking agent is 0.01 parts by weight to 0.4 parts by weight.

According to the further aspect of the present invention, the method for producing the shoe sole material is provided. The aforementioned shoe sole material composition is firstly provided. The elastomer of the shoe sole material composition is a continuous phase, and the thermoplastic material of the shoe sole material composition is a discontinuous phase dispersed in the continuous phase. Next, heating and blending the shoe sole material composition, such that a crosslinking reaction is performed to the elastomer with a crosslinking agent of the shoe sole material composition to obtain the shoe sole material. In the shoe sole material, the thermoplastic material is phase-inverted to a continuous phase, and the crosslinked elastomer is a discontinuous phase dispersed in the continuous phase.

According to an embodiment of the present invention, an amount of vinyl acetate groups of the ethylene vinyl acetate is 9% to 40%.

According to another embodiment of the present invention, the shoe sole material composition is heated to be higher than 180°C to perform the crosslinking reaction.

According to yet another embodiment of the present invention, the shoe sole material composition is heated to be higher than 180°C and lower than or equal to 240°C to perform the crosslinking reaction.

According to yet another embodiment of the present invention, based on a total amount of the elastomer and the thermoplastic material as 100 parts by weight, the amount of the elastomer is more than 50 parts by weight and less than or equal to 80 parts by weight, and the amount of the thermoplastic material is more than or equal to 20 parts by weight and less than 50 parts by weight.

According to yet another embodiment of the present invention, based on an amount of the elastomer as 100 parts by weight, an amount of the crosslinking agent is 0.01 parts by weight to 0.4 parts by weight.

According to the further aspect of the present invention, the shoe sole material is provided. The shoe sole material is formed by the aforementioned method.

In the shoe sole material composition, the shoe sole material and the method for producing the same of the present invention, the shoe sole material is made from recyclable material, thereby enhancing recyclable properties of the shoe sole, further improving reusability of the shoe sole.

### BRIEF DESCRIPTION OF THE DRAWINGS

The invention can be more fully understood by reading the following detailed description of the embodiment, with reference made to the accompanying drawings as follows:
FIG. 1A and FIG. 1B respectively show scanning electron microscope images according to the shoe sole material of Embodiment 1 of the present invention.
FIG. 2A and FIG. 2B respectively show scanning electron microscope images according to the shoe sole material of Embodiment 2 of the present invention.
FIG. 3A and FIG. 3B respectively show scanning electron microscope images according to the shoe sole material of Embodiment 3 of the present invention.
FIG. 4A and FIG. 4B respectively show scanning electron microscope images according to the shoe sole material of Comparative Embodiment 1 of the present invention.
FIG. 5A and FIG. 5B respectively show scanning electron microscope images according to the shoe sole material of Comparative Embodiment 2 of the present invention.
FIG. 6A and FIG. 6B respectively show scanning electron microscope images according to the shoe sole material of Comparative Embodiment 3 of the present invention.
FIG. 7 illustrates a stress-strain curve diagram according to the shoe sole material of Embodiment 1 to Embodiment 3 of the present invention.
FIG. 8 illustrates a stress-strain curve diagram according to the shoe sole material of Embodiment 1, Embodiment 2 and Comparative Embodiment 4 of the present invention.
FIG. 9 illustrates a stress-strain curve diagram according to the shoe sole material of Embodiment 3 and Comparative Embodiment 5 of the present invention.

### DETAILED DESCRIPTION

According to the aforementioned features, the effects of the aerogel particle and the method of producing the same can be clearly showed by following embodiments.

A shoe sole material composition of the present invention can include a blending mixture and a crosslinking agent. The blending mixture can include an elastomer and a thermoplastic material, and an amount of the elastomer is more than an amount of the thermoplastic material. The elastomer can include Ethylene Vinyl Acetate (EVA), Ethylene-Propylene-Diene Monomer (EPDM), Natural Rubber (NR), Polybutadiene Rubber (BR), other suitable elastomers or a combination thereof. In some embodiments, an amount of vinyl acetate groups of the ethylene vinyl acetate can be 9% to 40%, preferably be 18% to 40%, and more preferably be 26% to 33%. When the amount of the vinyl acetate groups is 9% to 40%, a shoe sole with excellent mechanism properties can be made from the shoe sole material composition.

Based on an amount of the blending mixture as 100 parts by weight, the amount of the elastomer is more than 50 parts by weight and less than or equal to 80 parts by weight, preferably is more than 50 parts by weight and less than or equal to 75 parts by weight, and more preferably is more than 50 parts by weight and less than or equal to 70 parts by weight.

The thermoplastic material can include thermoplastic polyurethane (TPU), polypropylene, high-density polyethylene, low-density polyethylene, polystyrene, poly(methyl methacrylate), polyoxymethylene, polycarbonate, polyolefin elastomer, other suitable thermoplastic materials, or a combination thereof. Based on the amount of the blending mixture as 100 parts by weight, the amount of the thermoplastic material is more than or equal to 20 parts by weight and less than 50 parts by weight, preferably is more than or equal to 25 parts by weight and less than 50 parts by weight, and more preferably is more than or equal to 30 parts by weight and less than 50 parts by weight.

The crosslinking agent of the present invention can be a high-temperature-reacting crosslinking agent. Preferably, a reacting temperature of the crosslinking agent of the present invention is higher than a melting temperature of the aforementioned blending mixture. In other words, the temperature of a crosslinking reaction induced by the crosslinking agent is higher than melting points of the elastomer and the thermoplastic material. Therefore, the elastomer and the thermoplastic material of the blending mixture have been melted to liquid states and mixed uniformly to be a mixture before the crosslinking reaction is induced by the crosslinking agent (i.e. before a system temperature is heated to the reaction temperature of the crosslinking reaction). It can be realized that applying shear force provided by a screw, such as a twin-screw, a single-screw or the like, can contribute to increase the temperature except heat energy provided by heating units of the blending device during blending, therefore being beneficial for melting the blending mixture. Because the amount of the elastomer is more than the amount of the thermoplastic material, the elastomer in the mixture is a continuous phase, and the thermoplastic material is a discontinuous phase dispersed in the continuous phase.

The aforementioned crosslinking agent can include but be not limited to 2,5-dimethyl-2,5-di(tert-butyl peroxy)hexane (DPD), dicumyl peroxide, benzoyl peroxide, other suitable crosslinking agents, or a combination thereof.

Based on the amount of the elastomer as 100 parts by weight, an amount of the crosslinking agent is 0.01 parts by weight to 0.4 parts by weight, preferably is 0.02 parts by weight to 0.3 parts by weight, and more preferably is 0.02 parts by weight to 0.25 parts by weight.

When the amount of the crosslinking agent is the aforementioned range, the crosslinking agent can efficiently subject the elastomer (i.e. the continuous phase) to the crosslinking reaction. The crosslinking agent can be uniformly dispersed in the continuous phase by mixing of the screw unit during blending.

When the amounts of the elastomer and the thermoplastic material are the aforementioned ranges, and the amount of the crosslinking agent is the aforementioned range, the continuous phase is the elastomer, and the discontinuous phase uniformly dispersed in the continuous phase is the thermoplastic material before the crosslinking reaction is performed. Further, during the crosslinking reaction, the crosslinking agent subjects the elastomer to the crosslinking reaction, thereby increasing a viscosity of the continuous phase (i.e. the elastomer), further subjecting the original discontinuous phase (i.e. the thermoplastic material) to be phase-inverted into the continuous phase and subjecting the elastomer to be formed as the discontinuous phase uniformly dispersed in the continuous phase (i.e. the thermoplastic material). Therefore, the continuous phase of the shoe sole material is the thermoplastic material, and the discontinuous phase of the shoe sole material is the elastomer. Because the thermoplastic material is a recyclable material, the shoe sole material of the present invention has excellent recycling property, and the shoe sole material is a completely recyclable material.

In the blending device, the shoe sole material composition of the present invention can be formed a mixture by heat energy applied by the heating units and shear force applied by the screw unit. Next, heating units further heat the mixture, such that the temperature of the mixture is higher than or equal to the temperature that the crosslinking reaction is induced by the crosslinking agent. In some embodiments, the reacting temperature of the crosslinking reaction is higher than 180°C. In some embodiments, the reacting temperature of the crosslinking reaction is higher than 180°C and lower than or equal to 240°C. In other embodiments, the reacting temperature of the crosslinking reaction is 195°C to 230°C. More preferably, the reacting temperature of the crosslinking reaction can be 200°C to 215°C.

When the temperature of the mixture is higher than or equal to the reacting temperature of the crosslinking reaction, the crosslinking reaction induced by the crosslinking agent is subjected to the elastomer. During the crosslinking reaction, a viscosity fraction of the elastomer increases as the increasing of the crosslinking degree, thereby subjecting the blending mixture to be phase-inverted, therefore the thermoplastic material is phase-inverted into the continuous phase, and the elastomer is phase-inverted to be the discontinuous phase uniformly dispersed in the continuous phase. Accordingly, the thermoplastic elastomer (i.e. the shoe sole material of the present invention) formed with the crosslinking reaction can be referred to as thermoplastic vulcanizate (TPV) due to the dynamic phase-inversion reaction produced by the elastomer and the thermoplastic material.

In some embodiments, a reaction time of the phase-inversion reaction is constant because the length and speed of the screw are fixed in the aforementioned blending process. Therefore, a reaction rate of the phase-inversion reaction can be varied by adjusting the temperature of the mixture. The reaction rate of the phase-inversion reaction is faster while the temperature of the mixture is higher, such that the discontinuous phase (i.e. the elastomer) of the thermoplastic vulcanizate has a higher crosslinking degree. Accordingly, properties of the thermoplastic vulcanizate can be adjusted to meet the requirements of applications.

After the crosslinking reaction is completed, the melted thermoplastic vulcanizate can further be used to form shoe sole material particles by an extrusion unit, a cooling unit and a granulating unit. It can be realized that shapes of the shoe sole material particles of the present invention are not to be limited granular. In other example, the shapes of the shoe sole material particles can be other suitable shapes based on the requirements of the application.

In some examples, the shoe sole material of the present invention can be further melted to produce a shoe sole after an extrusion molding process. Therefore, shoe manufacturers can further adhere a shoe upper to the shoe sole, so as to produce the shoe. In these examples, the shoe sole material can be melted with other additives based on the requirements of the shoe and/or the process, thereby improving qualities of the shoe sole and/or operations of the process.

In other examples, the aforementioned melted thermoplastic vulcanizate can be directly used to produce the shoe sole by the extrusion unit, a molding unit and the cooling unit. Therefore, the shoe sole can be provided to the shoe manufacturer.

In the shoe sole, the thermoplastic material can be phase-inverted into the continuous phase by the dynamic crosslinking reaction. Moreover, the shoe sole of the present invention has excellent recycling properties because the thermoplastic material has recyclable properties and the thermoplastic material is the continuous phase in the shoe sole. Accordingly, the shoe sole of the present invention is completely recyclable material.

The aforementioned composition of the present invention is not limited to be used to manufacture the shoe sole material. In other examples, the skilled in the art can utilize the aforementioned composition to produce other polymeric components, such as a plastic sheet, edge strips of car, sound insulating material, an air tight material, a packaging material or the like, based on the requirements of the application.

### Producing shoe sole material

### Embodiment 1

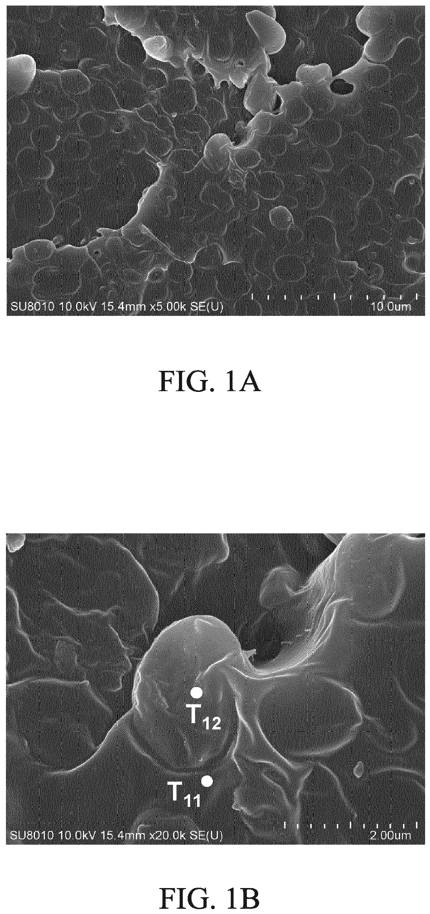

40 parts by weight of the thermoplastic polyurethane, 60 parts by weight of the ethylene vinyl acetate and 0.125 parts by weight of the crosslinking agent(commercial product manufactured by AkzoNobel, and the trade mark is TX 101-50D-PD) were firstly blended to obtain a mixture. An amount of vinyl acetate groups of the ethylene vinyl acetate is 26%. Next, the mixture was heated to 200°C to be subjected to a crosslinking reaction. After the crosslinking reaction was complete, the shoe sole material of Embodiment 1 was obtained. The shoe sole material of Embodiment 1 was observed by scanning electron microscope (SEM), and the images were shown as FIG. 1A and FIG. 1B. Scale bar in FIG. 1A was 10 µm, and Scale bar in FIG. 1B was 2.00 µm.

Besides, elemental compositions of inspection points T₁₁ and T₁₂ in FIG. 1B were analyzed by energy dispersive spectrometer (EDS). At the inspection point T₁₁, an amount of carbon atoms was 78.03 wt%, an amount of nitrogen atoms was 6.23 wt%, and an amount of oxygen atoms was 15.74 wt%. At the inspection point T₁₂, an amount of carbon atoms was 83.60 wt%, an amount of nitrogen atoms was 2.43 wt%, and an amount of oxygen atoms was 13.97 wt%.

### Embodiment 2

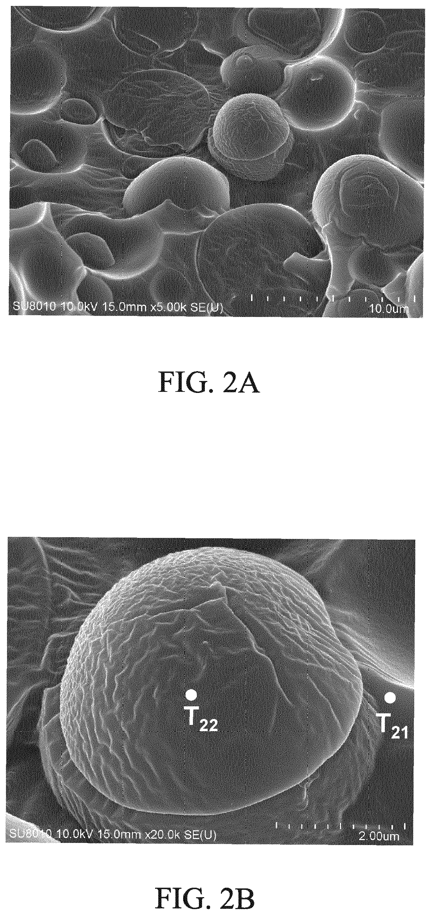

Embodiment 2 was practiced with the same method as in Embodiment 1 by heating the mixture to 220°C to be subjected to the crosslinking reaction. The shoe sole material of Embodiment 2 was observed by SEM, and the images were shown as FIG. 2A and FIG. 2B. Scale bar in FIG. 2A was 10 µm, and Scale bar in FIG. 2B was 2.00 µm.

Similarly, elemental compositions of inspection points T₂₁ and T₂₂ in FIG. 2B were analyzed by EDS. At the inspection point T₂₁, an amount of carbon atoms was 64.51 wt%, an amount of nitrogen atoms was 11.30 wt%, and an amount of oxygen atoms was 24.19 wt%. At the inspection point T₂₂, an amount of carbon atoms was 85.72 wt%, an amount of nitrogen atoms was 3.11 wt%, and an amount of oxygen atoms was 11.17 wt%.

### Embodiment 3

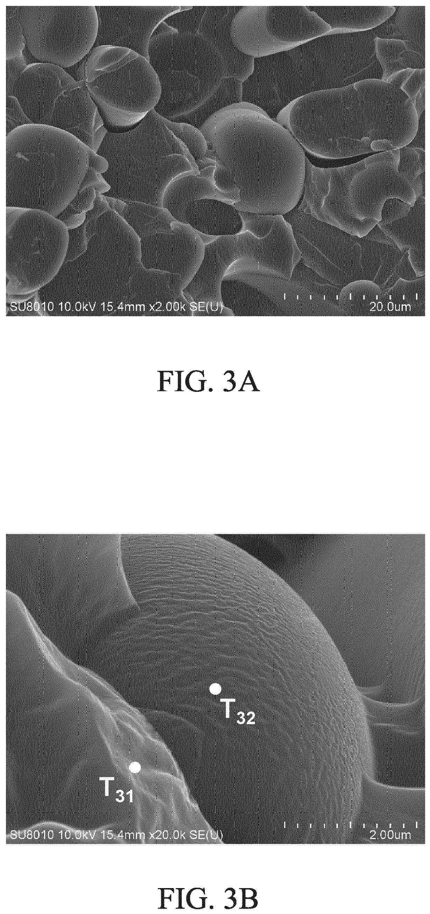

Embodiment 3 was practiced with the same method as in Embodiment 1 by blending 30 parts by weight of the thermoplastic polyurethane, 70 parts by weight of the ethylene vinyl acetate and 0.125 parts by weight of the TX 101-50D-PD, and heating the mixture to 240°C to be subjected to the crosslinking reaction. The shoe sole material of Embodiment 3 was observed by SEM, and the images were shown as FIG. 3A and FIG. 3B. Scale bar in FIG. 3A was 20 µm, and Scale bar in FIG. 3B was 2.00 µm.

Similarly, elemental compositions of inspection points T₃₁ and T₃₂ in FIG. 3B were analyzed by EDS. At the inspection point T₃₁, an amount of carbon atoms was 70.01 wt%, an amount of nitrogen atoms was 7.37 wt%, and an amount of oxygen atoms was 22.62 wt%. At the inspection point T₃₂, an amount of carbon atoms was 85.15 wt%, an amount of nitrogen atoms was 2.60 wt%, and an amount of oxygen atoms was 12.24 wt%.

### Comparative Embodiment 1

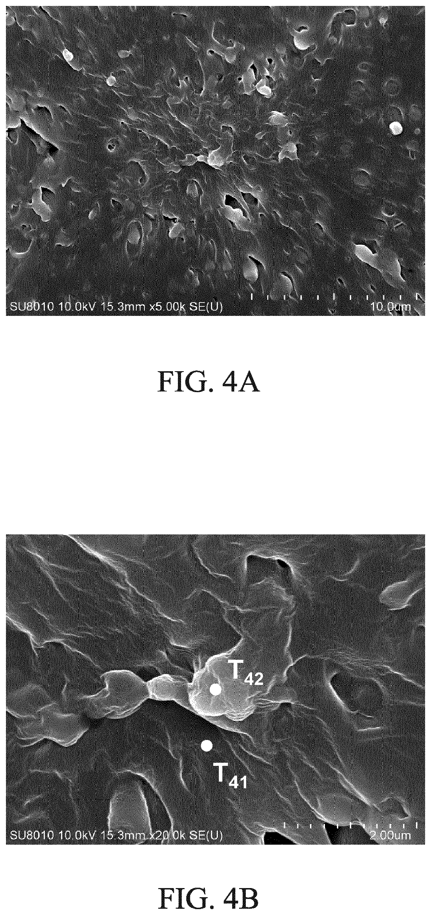

Comparative Embodiment 1 was practiced with the same method as in Embodiment 1 by heating the mixture to 180°C to be subjected to the crosslinking reaction. SEM images of Comparative Embodiment 1 were shown as FIG. 4A and FIG. 4B. Scale bar in FIG. 4A was 10 µm, and Scale bar in FIG. 4B was 2.00 µm.

Similarly, elemental compositions of inspection points T₄₁ and T₄₂ in FIG. 4B were analyzed by EDS. At the inspection point T₄₁, an amount of carbon atoms was 89.38 wt%, an amount of nitrogen atoms was 2.68 wt%, and an amount of oxygen atoms was 7.94 wt%. At the inspection point T₄₂, an amount of carbon atoms was 79.30 wt%, an amount of nitrogen atoms was 6.02 wt%, and an amount of oxygen atoms was 14.68 wt%.

### Comparative Embodiment 2

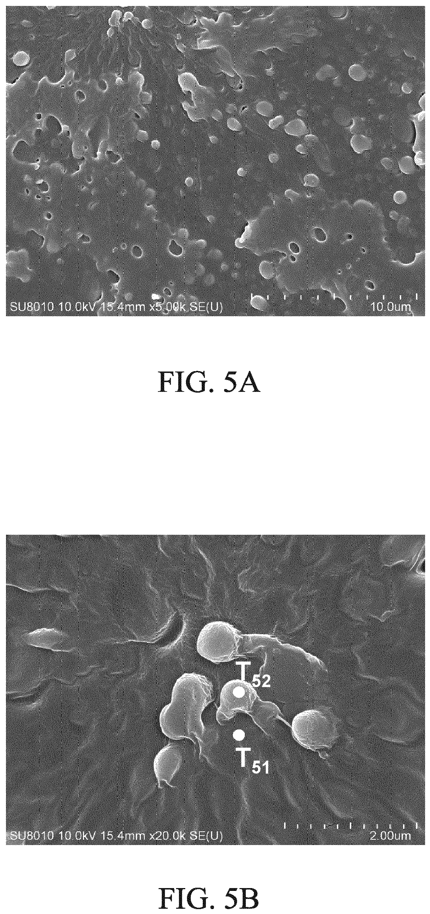

Comparative Embodiment 2 was practiced with the same method as in Embodiment 3 by heating the mixture to 180°C to be subjected to the crosslinking reaction. SEM images of Comparative Embodiment 2 were shown as FIG. 5A and FIG. 5B. Scale bar in FIG. 5A was 10 µm, and Scale bar in FIG. 5B was 2.00 µm.

Similarly, elemental compositions of inspection points T₅₁ and T₅₂ in FIG. 5B were analyzed by EDS. At the inspection point T₅₁, an amount of carbon atoms was 89.38 wt%, an amount of nitrogen atoms was 2.68 wt%, and an amount of oxygen atoms was 7.94 wt%. At the inspection point T₄₂, an amount of carbon atoms was 79.30 wt%, an amount of nitrogen atoms was 6.02 wt%, and an amount of oxygen atoms was 14.68 wt%.

### Comparative Embodiment 3

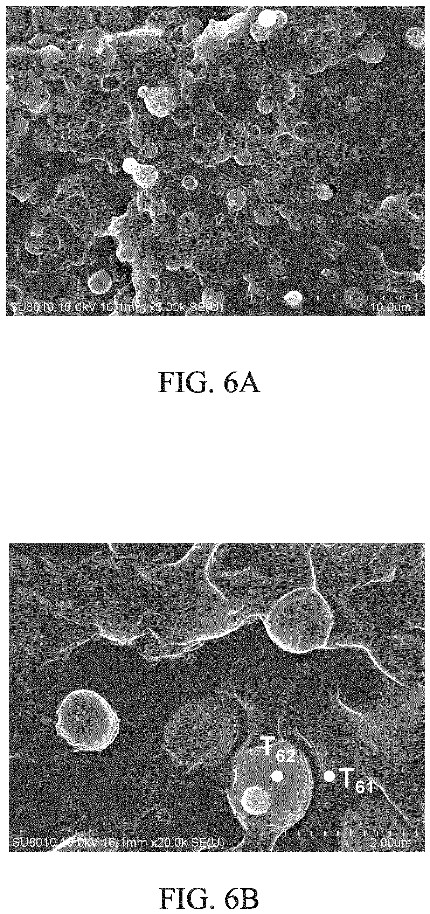

Comparative Embodiment 3 was practiced with the same method as in Comparative Embodiment 1 by blending 40 parts by weight of the thermoplastic polyurethane, 60 parts by weight of the ethylene vinyl acetate and 0.031 parts by weight of the TX 101-50D-PD, and heating the mixture to 180°C to be subjected to the crosslinking reaction. The shoe sole material of Comparative Embodiment 3 was observed by SEM, and the images were shown as FIG. 6A and FIG. 6B. Scale bar in FIG. 6A was 10 µm, and Scale bar in FIG. 6B was 2.00 µm.

Similarly, elemental compositions of inspection points T₆₁ and T₆₂ in FIG. 6B were analyzed by EDS. At the inspection point T₆₁, an amount of carbon atoms was 86.09 wt%, an amount of nitrogen atoms was 1.14 wt%, and an amount of oxygen atoms was 12.78 wt%. At the inspection point T₆₂, an amount of carbon atoms was 69.75 wt%, an amount of nitrogen atoms was 7.23 wt%, and an amount of oxygen atoms was 23.02 wt%.

### Comparative Embodiment 4 and Comparative Embodiment 5

Comparative Embodiment 4 and Comparative Embodiment 5 respectively were practiced with the same method as in Embodiment 1 and Embodiment 3 without adding the crosslinking agent, such that the mixtures of Comparative Embodiment 4 and Comparative Embodiment 5 were not subjected to the crosslinking reaction.

Shown as FIG. 1A to FIG. 6B, the shoe sole materials of Embodiment 1 to Embodiment 3 and Comparative Embodiment 1 to Comparative Embodiment 3 all had a flat continuous-phase surface (i.e. positions of the inspection points T₁₁, T₂₁, T₃₁, T₄₁, T₅₁ and T₆₁) and protruded discontinuous-phase particles (i.e. positions of the inspection points T₁₂, T₂₂, T₃₂, T₄₂, T₅₂ and T₆₂). The protruded particles were uniformly dispersed in the flat surface. According to the chemical structures of the thermoplastic polyurethane and the ethylene vinyl acetate, the thermoplastic polyurethane was equipped with nitrogen atoms, but the ethylene vinyl acetate was not equipped with nitrogen atoms. Therefore, based on the amount of the nitrogen atoms in EDS results of the aforementioned embodiments and comparative embodiments, the inspection points T₁₁, T₂₁ and T₃₁ of Embodiment 1 to Embodiment 3 were all the thermoplastic polyurethane, and the inspection points T₁₂, T₂₂ and T₃₂ of Embodiment 1 to Embodiment 3 were all the ethylene vinyl acetate; the inspection points T₄₁, T₅₁ and T₆₁ of Comparative Embodiment 1 to Comparative Embodiment 3 were all the ethylene vinyl acetate, and the inspection points T₄₂, T₅₂ and T₆₂ of Comparative Embodiment 1 to Comparative Embodiment 3 were all the thermoplastic polyurethane. Thus, the elastomer and the thermoplastic material in the shoe sole material of Embodiment 1 to Embodiment 3 were subjected to the dynamic phase-inversion by the crosslinking reaction induced by the crosslinking agent, thereby enhancing recyclable properties of the shoe sole material.

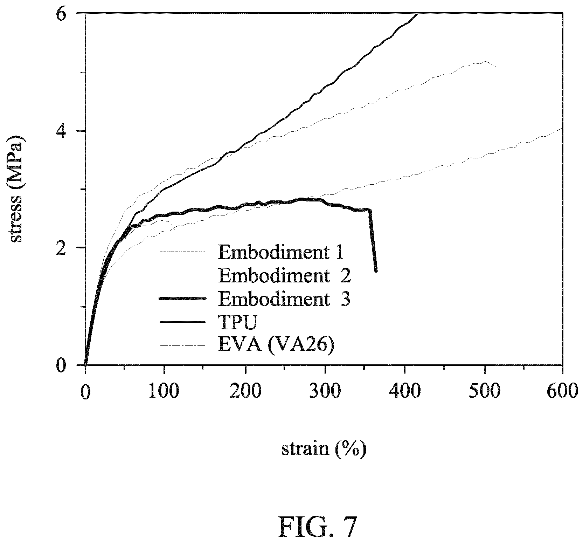

Referring to FIG. 7, which is a stress-strain curve diagram according to the shoe sole material of Embodiment 1 to Embodiment 3 of the present invention. The curve TPU represented that the process merely blended pure thermoplastic material. The curve EVA (VA26) represented that the process merely blended pure ethylene vinyl acetate, and an amount of vinyl acetate groups of the ethylene vinyl acetate was 26%. The shoe sole material of Embodiment 1 had a higher Young's modulus and was tougher than the shoe sole materials formed from the pure TPU or pure EVA. Compared with Embodiment 1, Young's modulus and toughness were lower when the crosslinking degree was increased (i.e. Embodiment 2 and Embodiment 3).

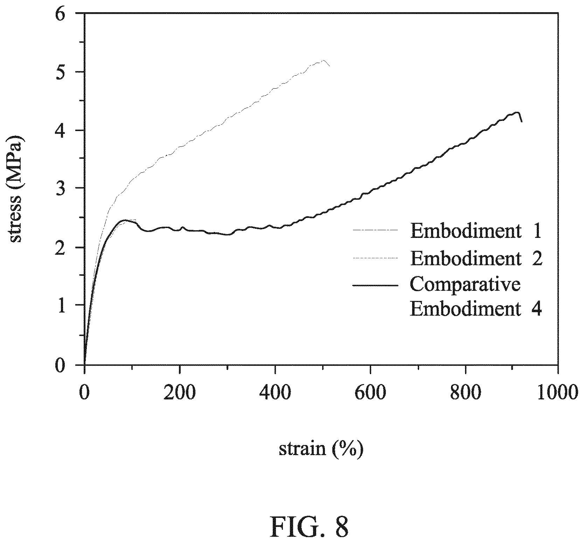

Referring to FIG. 8, which is a stress-strain curve diagram according to the shoe sole material of Embodiment 1, Embodiment 2 and Comparative Embodiment 4 of the present invention. The shoe sole material (i.e. Embodiment 1) formed with the crosslinking reaction had a stronger strength than that of Comparative Embodiment 4. In the Embodiment 1 and Embodiment 2, the shoe sole materials were tougher as the increasing of the temperature of the crosslinking reaction.

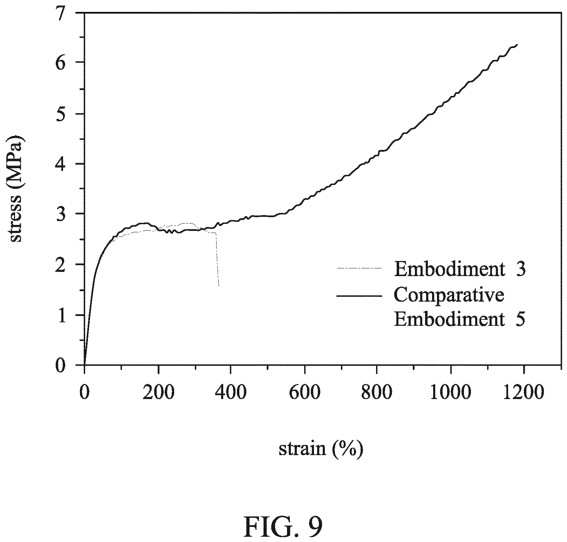

Referring to FIG. 9, which is a stress-strain curve diagram according to the shoe sole material of Embodiment 3 and Comparative Embodiment 5 of the present invention. Comparing with Comparative Embodiment 5, the shoe sole material of Embodiment 3 had lower toughness due to the increasing of the crosslinking degree.

Based on the aforementioned description, the shoe sole material composition of the present invention is formed by blending recyclable materials, and further subjected to the crosslinking reaction, so as to obtain the shoe sole material of the present invention. Because the crosslinking agent is selectively subjected the elastomer to the crosslinking reaction, the crosslinking degree of the elastomer is increased, thereby inducing the phase-inversion reaction. Therefore, the shoe sole material has the continuous phase formed from the thermoplastic material and the discontinuous phase formed from the elastomer, and the discontinuous phase is uniformly dispersed in the continuous phase. The recyclable properties of the shoe sole material of the present invention are substantially enhanced due to the thermoplastic material (i.e. the continuous phase) with excellent recyclable properties. Accordingly, the shoe sole of the present invention is completely recyclable, therefore being equipped with better reusability of resources.

## Claims

1. A shoe sole material composition, comprising:
a blending mixture, comprising:
an elastomer, including an ethylene vinyl acetate; and
a thermoplastic material, including a thermoplastic polyurethane, wherein an amount of the elastomer is more than an amount of the thermoplastic material, and
in the blending mixture, the elastomer is a continuous phase, and the thermoplastic material is a discontinuous phase dispersed in the continuous phase; and
a crosslinking agent, wherein the crosslinking agent subjects the elastomer to be subjected to a crosslinking reaction, and
wherein a shoe sole material is obtained by performing the crosslinking reaction to the shoe sole material composition, and
in the shoe sole material, the thermoplastic material is phase-inverted into a continuous phase, and the crosslinked elastomer is a discontinuous phase dispersed in the continuous phase.

2. The shoe sole material composition of claim 1, wherein an amount of vinyl acetate groups of the ethylene vinyl acetate is 9% to 40%.

3. The shoe sole material composition of any of claims 1-2, wherein a reacting temperature of the crosslinking reaction is higher than 180°C.

4. The shoe sole material composition of claim 3, wherein the reacting temperature of the crosslinking reaction is higher than 180°C and lower than or equal to 240°C.

5. The shoe sole material composition of any of claims 1-4, wherein based on an amount of the blending mixture as 100 parts by weight, the amount of the elastomer is more than 50 parts by weight and less than or equal to 80 parts by weight, and the amount of the thermoplastic material is more than or equal to 20 parts by weight and less than 50 parts by weight.

6. The shoe sole material composition of any of claims 1-5, wherein based on the amount of the elastomer as 100 parts by weight, an amount of the crosslinking agent is 0.01 parts by weight to 0.4 parts by weight.

7. A method for producing a shoe sole material, comprising:
providing a shoe sole material composition of claim 1, wherein an elastomer of the shoe sole material composition is a continuous phase, and a thermoplastic material of the shoe sole material composition is a discontinuous phase dispersed in the continuous phase;
heating and blending the shoe sole material composition, such that a crosslinking reaction is performed to the elastomer with a crosslinking agent of the shoe sole material composition to obtain the shoe sole material, and
in the shoe sole material, the thermoplastic material is phase-inverted to a continuous phase, and the crosslinked elastomer is a discontinuous phase dispersed in the continuous phase.

8. The method for producing the shoe sole material of claim 7, wherein an amount of vinyl acetate groups of the ethylene vinyl acetate is 9% to 40%.

9. The method for producing the shoe sole material of any of claims 7-8, wherein the shoe sole material composition is heated to be higher than 180°C to perform the crosslinking reaction.

10. The method for producing the shoe sole material of claim 9, wherein the shoe sole material composition is heated to be higher than 180°C and lower than or equal to 240°C to perform the crosslinking reaction.

11. The method for producing the shoe sole material of any of claims 7-10, wherein based on a total amount of the elastomer and the thermoplastic material as 100 parts by weight, the amount of the elastomer is more than 50 parts by weight and less than or equal to 80 parts by weight, and the amount of the thermoplastic material is more than or equal to 20 parts by weight and less than 50 parts by weight.

12. The method for producing the shoe sole material of any of claims 7-11, wherein based on an amount of the elastomer as 100 parts by weight, an amount of the crosslinking agent is 0.01 parts by weight to 0.4 parts by weight.

13. A shoe sole material, formed by a method of any of claims 7-12.
